# NEUE EUROPÄISCHE PATENTSCHRIFT

(11) **EP 0 215 073 B2**
(45) Veröffentlichungstag und Bekanntmachung des Hinweises auf die Entscheidung über den Einspruch: **16.03.1994**
(45) Hinweis auf die Patenterteilung: 27.02.1991
(21) Anmeldenummer: 86901790.5
(22) Anmeldetag: 07.03.1986
(51) Int. Cl.: B23D 51/02, B23D 49/16

(54) **STICHSÄGE**
COMPASS SAW
SCIE SAUTEUSE

(30) Priorität: 16.03.1985 DE 3509515
(43) Veröffentlichungstag der Anmeldung: 25.03.1987
(73) Patentinhaber: Festo KG, D-73734 Esslingen (DE)
(72) Erfinder: MAIER, Peter, D-7311 Neidlingen (DE); ARNOLD, Günter, D-7441 Kohlberg (DE); HÄNSEL, Gernot, D-7000 Stuttgart 70 (DE)
(74) Vertreter: Magenbauer, Rudolf
(86) Internationale Anmeldenummer: DE8600096
(87) Internationale Veröffentlichungsnummer: WO8605427

(56) Entgegenhaltungen:
- WO-A-83/00836
- FR-A- 1 448 982
- US-A- 1 445 820
- US-A- 1 690 808
- US-A- 2 841 993
- US-A- 3 339 598
- GB A 7596 AD 1909

## Beschreibung

Die Erfindung betrifft eine Stichsäge zum Bearbeiten von starren Materialien, wie Holz, mit einem mit einer Laufsohle auf einem zu bearbeitenden Werkstück aufzulegenden Sägetisch, mit einem in einem Motorkopf untergebrachten Antriebsaggregat und einem durch das Antriebsaggregat periodisch bewegbaren Sägeblatthalter mit einem endseitig einspannbaren Sägeblatt, sowie mit einer Einrichtung zur seitlichen Führung und Abstützung des Sägeblattes, die eine gegen die Sägeblattrückseite anliegende Andrückrolle enthält, die an einem am Motorkopf gehalterten Pendelhalter mit einer zur Sägeblattebene rechtwinkeligen Achse gelagert ist.

Derartige motorgetriebene Stichsägen sind für gewerbliche Anwendungen und im Handwerkerbereich weitverbreitet. Im Betrieb wird die Stichsäge üblicherweise am Motorkopf gehalten und über das zu sägende Werkstück geführt, wobei sich der Sägetisch auf dem Werkstück abstützt und das überstehende Ende des Sägeblattes gegen das Werkstück arbeitet und insbesondere durchtrennt. Die bekannten Stichsägen haben den Nachteil, daß sich mit ihnen schwerlich ein exakter und gerader Schnitt erzielen läßt. Das freie Ende des Sägeblattes weicht leicht zur Seite hin aus, so daß die Gefahr besteht, daß die Säge verläuft. Auch beim nachträglichen Bearbeiten von Werkstückkanten, von denen nur eine geringe Materialstärke abgetrennt werden soll, z.B. einige Millimeter, stellen sich erhöhte Schwierigkeiten ein, da das Sägeblatt leichtabgelenkt wird und somit nicht über die gesamte Sägetiefe den gewünschten konstanten Materialabtrag liefert. Aufgrund der geringen Stabilität des Sägeblattes ist die Materialstärke des zu zersägenden Werkstückes sehr begrenzt und bei mehr als 30 mm oder 40 mm dickem Holz drückt sich das Sägeblatt ebenfalls unweigerlich weg, und man erhält, völlig unbeabsichtigt, einen schrägen Schnitt. Sollen dickere Platten zersägt werden, so ist der Einsatz einer Kreissäge unerläßlich. Zwarweisen bereits bekannte Stichsägen die mit Pendelhub ausgestattet sind, gewisse seitliche Führungen auf, die von einer pendelnd aufgehängten Andrückrolle gebildet werden. In dieser Rolle ist eine Umfangsnut eingebracht, deren Nutgrund an der Rückseite des Sägeblattes anliegt und dieses pendelnd betätigt. Gleichzeitig dienen die Flanken dieser Umfangsnut gewissermaßen zur Stabilisierung des Sägeblattes, wobei jedoch die Wirkung dieser Stabilisierung sehr gering ist, da die Andrückrolle in großem Abstand zum Sägetisch angeordnet ist und dadurch einem Abbiegen des Sägeblattes kaum entgegenwirken kann. Weiterhin ist die Tiefe der Umfangsnut aus Verschleißgründen sehr gering gewählt, ausserdem ist die Umfangsnut mit relativ großem Spiel behaftet, so daß die Führung durch die Andrückrolle viel zu wünschen übrig läßt.

Man hat immer wieder versucht, den obigen Nachteilen abzuhelfen. So z.B. zeigt die US-PS 33 39 598 die Verwendung von seitlich am Sägeblatt anliegenden kugelförmigen Führungselementen, jedoch kann mit dieser Anordnung der Nachteil der mangelnden seitlichen Stabilisierung des Sägeblattes auch nicht vermieden werden, da die dort gezeigten kugelförmigen Führungselemente an dem am Sägetisch seitlich hin und her beweglich gelagerten Splitterschutz angebracht sind, so daß sie sich mit diesem hin und her bewegen, was aber nicht verwunderlich ist, da dieser bekannten Anordnung die Aufgabe zugrundeliegt, die Reibung zwischen dem Sägeblatt und den Seitenwandungen der es führenden Nut im Splitterschutz zu verringern oder eventuell ganz aufzuheben. Zum Stabilisieren des in der Nut auf und ab gehenden Sägeblattes dienen diese Elemente nicht, sie können dies auch nicht bewirken, da sie beweglich gelagert sind und dem Sägeblatt seitlich nachgehen. Mit der WO 83/00836 ist eine Stichsäge vorgeschlagen worden, die eine Führung an der Hinterkante des Sägeblattes besitzt, jedoch keine Seitenführung, so daß die oben aufgezeigten Mängel des Standes der Technik hier auch auftreten. Die dort gezeigte Lehre geht insofern nicht über diejenige der weiterhin bekannten, den nächst kommenden Stand der Technik beschreibenden DE-OS 30 21 801 hinaus, die eine Stichsäge zeigt, bei der eine Führung der gesamten Stichsäge dadurch erreicht wird, daß die Stichsäge im Bereich ihrer Unterseite mit einem im Schneidspalt gleitenden Führungsschwert ausgerüstet ist. Hierbei handelt es sich um eine Stichsäge mit einer Vorrichtung zur Einstellung eines Pendelhubes des Sägeblattes unter rückseitiger Abstützung des Sägeblattes durch eine pendelnd aufgehängte Stützrolle, die zur Abstützung des Sägeblattes und zur Aufnahme dervorschubabhängig auftretenden Schnittkräfte an der Hinterkante des Sägeblattes oberhalb des Sägetisches angeordnet ist und die eine Umfangsnut besitzt, in der die Hinterkante des Sägeblattes lose läuft. Eine derartige Stützrolle ist jedoch nicht geeignet, seitlichen Verwindungen des Sägeblattes im Schneidspalt hinreichend entgegenzuwirken. Die FR-PS 14 48 982 zeigt eine gattungsfremde Sägeblatteinspannung in Verbindung mit Spann- oder Griffstücken, jedoch keine Seitenführung jenseits einer einseitigen Einspannung eines Sägeblattes an Stichsägen. Auch die Anordnung nach der US-PS 16 90 808 ist gattungsfremd, sie betrifft keine Stichsäge, sondern eine Säge zum Schneiden von Stoffen, hier geht es gar nicht um eine richtige Führung für das Sägeblatt, so wie es beim Schneiden von starren Werkstücken, wie Holz, beansprucht wird. Es ist dort eine seitliche Kugelführung für Tuchschneidmesser innerhalb der im wesentlichen geschlossenen Messerführung gezeigt, eine Anregung für eine Seitenführung eines Sägeblattes, das frei beweglich einseitig eingespannt ist, ist aus dieser US-PS 16 90 808 auch nicht zu entnehmen.

Die Aufgabe der Erfindung ist es, den obigen Nachteilen abzuhelfen und eine Stichsäge zu schaffen, die bei einfachem und kostengünstigem Aufbau eine hohe Schnittgenauigkeit ermöglicht und insbesondere das Verlaufen des Sägeblattes praktisch ausschließt.

Die obige Aufgabe wird dadurch gelöst, daß der Pendelhalter sich bis in die Nähe der Laufsohle des Sägetisches erstreckt und im unteren Endbereich zwei das Sägeblatt von beiden Seiten flankierende und es zwischen sich aufnehmende Tragarme für das Sägeblatt seitlich führende Stabilisierungselemente besitzt.

Durch die erfindungsgemäße Maßnahme ergibt sich ein einfacher Aufbau, mit dem - der Andrückrollenhalter oder Pendel halter ist gleichzeitig Halter für die Stabilisierungselemente - das Sägeblatt durch die seitlich gegen seine Flanken anliegenden Stabilisierungselemente in seiner Bewegung stabilisiert wird, wobei sich die Führungen oder Stabilisierungselemente vorteilhafterweise so nahe wie möglich am Werkstück befinden, so daß das Biegemoment, das auf den über die Laufsohle überstehenden Sägeabschnitt des Sägeblattes wirkt, weitestmöglich reduziertwerden kann, um ein Verbiegen des Sägeblattes an der Austrittsseite des Schnittes zu verhindern. Vor allem auch bei starken, auf die Sägeblattflanken wirkenden Seitenkräften ist einem seitlichen Ausweichen des Sägeblattes in vorteilhafter Weise entgegengewirkt, der wirksame, ein Verbiegen des Sägeblattes hervorrufende Hebelarm ist gegenüber bekannten Ausführungen erheblich reduziert. Bei alledem ist der Aufbau ganz wesentlich vereinfacht. Diese Vorteile sind bei den bekannten Sägen nicht vorhanden, die auch nicht Merkmale aufweisen, die den durchschnittlichen Fachmann ohne eigene schöpferische Leistung in die Nähe der Erfindung oder an die Erfindung heranführen könnten.

Die Erfindung wird im folgenden anhand beiliegender Zeichnungen näher erläutert, wobei noch auf weitere Vorteile eingegangen wird. Insbesondere erfolgt zunächst ein allgemeiner Überblick über die erfindungsgemäße Stichsäge, nachfolgend schließt sich eine Beschreibung mehrerer Ausführungsform zur stabilen Führung des Sägeblattes an. In den Zeichnungen zeigen:
Figur 1 die Seitenansicht einer Stichsäge ;
Figur 2 eine Vorderansicht der Stichsäge aus Figur 1 bei abgenommenem Sägeblatt und ohne Stabilisierungselemente ;
Figur 3 bis 6 verschieden Ausführungsformen der Stabilisierungselemente und ihre Befestigungsweise.

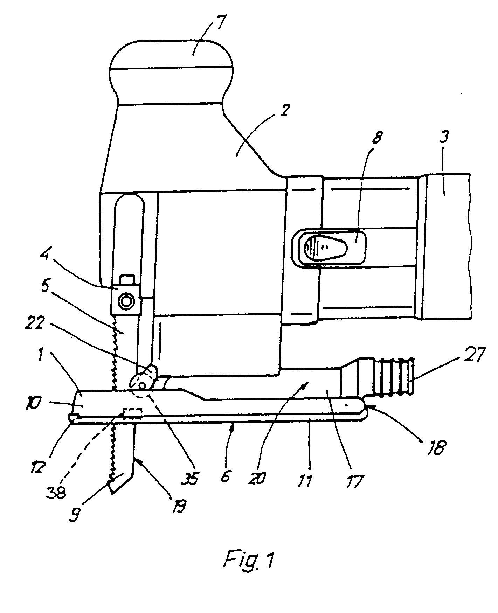

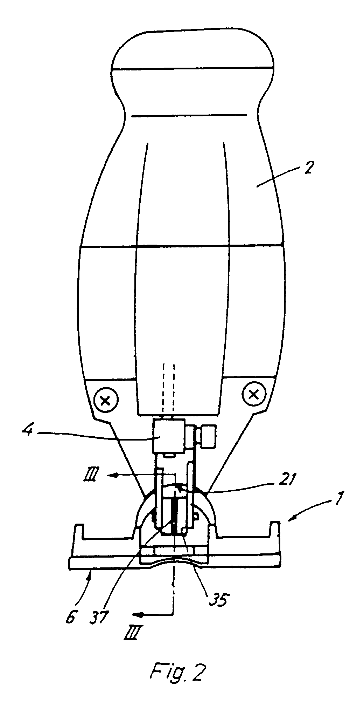

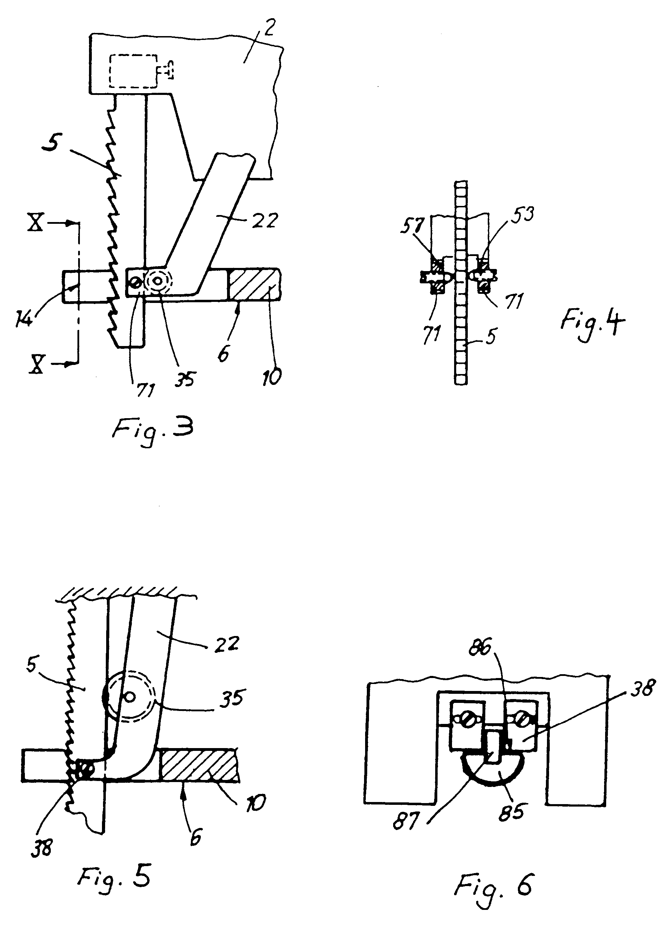

Unter Bezugnahme zunächst auf Fig. 1 und 2 soll der allgemeine Aufbau der erfindungsgemäßen Stichsäge erläutert werden. Die dargestellte Stichsäge ist eine motorgetriebene Handstichsäge, und sie besitzt einen auf einem Werkstück auflegbaren Sägetisch 1, der einen Motorkopf 2 (Antriebsmotor und Getriebe) mit einem Antriebsaggregat 3 (Stabmotor) trägt. Das Antriebsaggregat 3 treibt einen Sägeblatthalter 4 in einer periodischen Auf- und Abbewegung an, an welchem sich ein nach unten ragendes Sägeblatt 5 spannen läßt. Das Sägeblatt 5 greift durch eine Ausnehmung in dem Sägetisch 1 hindurch und ragt über die dem zu bearbeitenden Werkstück zugewandte Laufsohle 6 des Sägetisches 1 hinaus. Im Betrieb wird die Stichsäge üblicherweise mit der Laufsohle des Sägetisches 1 auf ein zu zersägendes Werkstück aufgesetzt. Man hält die Stichsäge mit einer Hand an dem Motorkopf 2, dessen obere Partie als Griffknauf 7 ausgebildet ist, und mit der anderen Hand am Gehäuse des Antriebsaggregats 3, an dem sich auch ein Schalter 8 zum Ein- und Ausschalten und gegebenenfalls zur Drehzahlregelung des Antriebsaggregates 3 befindet. Die Stichsäge wird entsprechend der gewünschten Schnittlinie über das Werkstück geführt, wobei dieses von dem überstehenden Ende 9 des Sägeblattes 5 zersägt wird.

Der Sägetisch 1 ist im wesentlichen zweiteilig aufgebaut und besteht aus einer Fußplatte 10 und einem lösbar damit verbundenen Laufschuh 11, der die Unterseite der Fußplatte 10 abdeckt und allseits über den Rand derselben hinaussteht. Die Fußplatte 10 besteht aus Metall, insbesondere Leichtmetall wie z.B. Aluminiumdruckguß. Zum Schutze des Werkstückes vor Beschädigungen wie Kratzern od.dgl. besteht der Laufschuh 11 aus Kunststoff. Er hat die Gestalt einer ebenen Platte mit einem umlaufenden, nach oben abstehenden Randsteg 12, der die Fußplatte 10 im angesetzten Zustand des Laufschuhs 11 formschlüssig umschließt. Die lösbare Verbindung zwischen Fußplatte 10 und Laufschuh 11 kann beispielsweise durch Verschrauben hergestellt werden, z.B. mittels Schrauben 80.

Der Sägetisch 1 hat einen länglich-rechteckigen Grundriß, wobei im Bereich des Sägeblattes 5 eine zu der in Sägerichtung weisenden Vorderseite hin offene, mittige Ausnehmung vorhanden ist. Der Sägetisch 1 hat also eine U-Form, wobei die Ausnehmung durch die beiden Schenkel des U flankiert wird. Selbstverständlich besitzt sowohl die Fußplatte 10 als auch der Laufschuh 11 eine derartige U-Ausnehmung.

Gemäß Figur 1 und 2 ist mit der Fußplatte 10 des Sägetisches 1 ein hohlprofilförmiger Aufsatz 17 fest verbunden, der einen inneliegenden Absaugkanal begrenzt, der einerseits unmittelbar hinter der sägezahnlosen Rückseite 19 des Sägeblattes 5 ausmündet und andererseits in einen Absaugstutzen 27 übergeht, der der rückwärtigen Schmalseite 18 des Sägetisches 1 zugeordnet ist. An den Absaugstutzen 27 ist ein Absaugschlauch oder dergleichen ansetzbar, über den eine wirkungsvolle Spanabfuhr durchgeführt werden kann. Es sei an dieser Stelle darauf hingewiesen, daß die Erfindung selbstverständlich unabhängig von einer Absaugeinrichtung existieren kann.

Der Aufsatz 17 trägt den Motorkopf 2, seine Oberseite 20 ist als Mantelabschnitt eines Kreiszylinders konturiert, wobei die Winkelerstreckung in dem dargestellten Ausführungsbeispiel ca. 180° beträgt ; der Aufsatz 17 hat also in etwa die Gestalt eines halbierten Kreiszylinders. Der Motorkopf 2 ist an seiner Unterseite 21 komplementär zu dem Aufsatz 17 ausgebildet, sein Auflager bildet also ebenfalls den.

Abschnitt einer Zylindermantelfläche, dessen Winkelerstreckung jedoch wesentlich kleiner ist als die des Aufsatzes 17. Auf diese Weise besteht Spiel für eine Schwenkbewegung des Motorkopfes 2 und dadurch des Sägeblattes 5. Im montierten Zustand kommt der Motorkopf 2 formschlüssig mit dem Aufsatz 17 zurAnlage, und er wird mittels einer nicht dargestellten Klemmschraube in gewünschten Winkelstellungen auf dem Aufsatz 17 arretiert. Durch diese Anordnung hat man die Möglichkeit, mit der erfindungsgemäßen Stichsäge auch Gehrungsschnitte durchzuführen, vorteilhafterweise lassen sich die einzelnen Schnittwinkel stufenlos und auf einfache Art und Weise einstellen.

Das Sägeblatt 5 der erfindungsgemäßen Stichsäge ist zur Erzielung eines geraden Schnittes mehrfach seitlich abgestützt und stabilisiert. Man erkennt zunächst in Fig. 1 und 2 eine Andrückrolle 35, die sich gegen die Rückseite 19 des Sägeblattes 5 abstützt, welches in Fig. 2 der Übersichtlichkeit halber nicht dargestellt ist Die Andrückrolle 35 ist im Abstand oberhalb des Sägetisches 1 angeordnet und an einem im wesentlichen aus zwei Trägern bestehenden Pendelhalter 22 drehbar gelagert. Dieser führt ins Innere des motorkopfes 2 und ist dort schwenkbar aufgehängt, so daß er sich entsprechend der Pendelbewegung des Sägeblattes bewegen kann. Die beschriebene Stichsäge ist also als Pendelhub-Stichsäge ausgeführt, bei der das Sägeblatt 5 zusätzlich zu seiner periodischen Auf- und Abbewegung eine pendelartige Schwenkbewegung ausführt, die in der Ebene des Sägeblattes verlauft. Die Andrückrolle 35 selbst weist in axialer Mitte eine Umfangsnut auf, deren Breite der Dicke der Sägeblattes 5 zuzüglich einem geringen Laufspiel entspricht und in die der Rücken des Sägeblattes 5 eingreift. Die Rückseite 19 liegt dabei am Nutgrund an, so daß das Sägeblatt 5 darüber hinaus zwischen den Nutflanken seitlich stabilisiert ist. Die Führungsqualitäten dieser Nutflanken sind jedoch sehr gering, da sie das Sägeblatt nur zu einem geringen Teil aufnehmen und zudem die Andrückrolle 35 in erheblichem Abstand oberhalb der Laufsohle 6 des Sägetisches 1 angeordnet ist. Dieses letztere hat zur Folge, daß zwischen dem überstehenden Ende 9 des Sägeblattes 5 und dessen seitlicher Abstützung durch die Rolle 35 ein sehr großer Hebelarm besteht, der bei Einwirkung einer seitlichen Kraft auf das überstehende Ende 9 ein leichtes Verbiegen des Sägeblattes 5 ermöglicht.

Aus den obigen Gründen ist erfindungsgemäß vorgesehen, daß das Sägeblatt zwischen der Laufsohle 6 und dem Sägeblatthalter 4 zusätzlich seitlich geführt ist, und zwar insbesondere auf der Höhe des Sägetisches 1 und unter geringem Abstand zur Laufsohle 6. Diese seitliche Führung wird durch Stabilisierungselemente vorgenommen, die im wesentlichen seitlich gegen das Sägeblatt 5 arbeiten, welches zwischen diesen Stabilisierungselementen läuft. Als Ausführungsvarianten zur Durchführung der seitlichen Stabilisierung des Sägeblattes bieten sich zahlreiche Varianten an, die insbesondere unter den Figuren 3 bis 6 im einzelnen näher erläutert werden. Dabei soll zunächst anhand der Figur 3 bis 5 ein allgemeiner Überblick über die Anordnungsweise von Stabilisierungselementen erfolgen. Sämtliche Ausführungsformen haben gemeinsam, daß die Stabilisierungselemente gegen den nicht verzahnten Teil des Sägeblattes arbeiten, um den Verschleiß der Stabilisierungselemente zu mindern.

Nachfolgend sollen anhand der Detailfiguren 3 bis 6 verschiedene Varianten der Stabilisierung des Sägeblattes bzw. der Ausführungs- und Montagemöglichkeiten von Stabilisierungselementen näher erläutert werden. In der Regel wurde in den Figuren auf die Darstellung eines Splitterschutzes verzichtet, dieser kann jedoch sehr wohl bei den einzelnen Fällen Verwendung finden. Ebenso können die aufgeführten Stabilisierungsvarianten an beliebigen Sägetischen, sei es mit oder ohne Staubabsaugung, vorgesehen werden, sie sind ebenfalls unabhängig davon, ob die verwendete Stichsäge nur Geradschnitte zuläßt oder aber auch Gehrungsschnitte ermöglicht. Bauteile mit gleicher Benennung sind mit identischen Bezugsziffern versehen.

Die nachfolgend beschriebenen Figuren 3 bis 5 beziehen sich insbesondere auf Stichsägen, die mit einer unter den Figuren 1 und 2 bereits beschriebenen Andrückrolle 35 versehen sind.

Figur 3 zeigt einen Abschnitt des Motorkopfes 2 und der Fußplatte 10 des Sägetisches. Weiterhin erkennt man das Sägeblatt 5, das sich ausgehend vom Motorkopf durch die Aufnahme 14 der Fußplatte 10 hindurch erstreckt. Im Motorkopf ist ein Pendelhalter 22 gelagert, der dem Sägeblatt in Schnittrichtung gesehen nachgeordnet ist und vorzugsweise in einer mit der Sägeblattebene zusammenfallenden Ebene verläuft. Er ist bis an die Fußplatte 10 heruntergezogen und endigt oberhalb der Laufsohle 6, vorteilhafterweise innerhalb der Ausnehmung 14 ; in deren Bereich ist am Pendelhalter 22 eine Andrückrolle 35 drehbar gelagert, deren Drehachse im rechten Winkel zur Sägeblattebene verläuft. Wie bereits unter den Figuren 1 und 2 erläutert, weist diese Rolle eine mittige Umfangsnut auf, in der die Rückseite des Sägeblattes 5 geführt einsitzt. Ist die Stichsäge als Pendelhub-Stichsäge ausgebildet, so ist der Pendel halter 22 am Motorkopf gelenkig gelagert, es besteht jedoch auch die Möglichkeit, bei einer konventionellen Stichsäge den Pendelhalter 22 starr im oder am Motorkopf anzusetzen. In diesem Falle wirkt die Rolle 35 ebenfalls als Gegenlagerfür die beim Sägen von vorne her auf das Sägeblatt einwirkenden Kräfte. Der Pendelhalter 22 ist gegenüber üblichen Ausführungsweisen verlängert, bei welcher die Rolle 35 in relativ großem Abstand zur Laufsohle 6 oberhalb des Sägetisches am Sägeblatt 5 anliegt

Im Bereich der Lagerstelle der Rolle 35 besitzt der Pendel halter zwei Tragarme 71, die das Sägeblatt 5 seitlich flankieren und zwischen sich aufnehmen. Dies ist vor allem auch in Figur 4 gut zu erkennen, die einen Schnitt gemäß der Linie X-X aus Figur 3 darstellt. Man erkennt zwischen den einander zugewandten Innenflächen der Tragarme 71 ein relativ großes Laufspiel für das Sägeblatt 5, gleichzeitig ist jedoch an jedem der Tragarme 71 eine ein Stabilisierungselement bildende Stellschraube 53 in einer entsprechenden Gewindebohrung aufgenommen. Beide Stellschrauben 53 sind quer zum Sägeblatt 5 bewegbar, ihre Stirnseite 57 dient als Führungs- und Stabilisierungsfläche für das Sägeblatt 5. Vorzugsweise enden die Tragarme 71 vor den Schneiden des Sägeblattes, damit erreichen sie die Sägezähne nicht, dies ist jedoch infolge des schon erwähnten grösseren Laufspiels nicht notwendigerweise erforderlich. Eine nicht dargestellte Ausführungsform sieht vor, die Tragarme 71 selbst als Stabilisierungselemente auszubilden, wobei in diesem Falle das Laufspiel bezüglich des Sägeblattes auf nahezu Null reduziert wird. Herstellungstechnisch kann diese Ausführungsform einfacherweise dadurch gefertigt werden, daß der Pendel halter im Bereich des Sägeblattes 5 im Rohzustand zunächst klotzartig ausgeführt ist und anschließend mit einer Führungsnut versehen wird, in der das Sägeblatt 5 geführt wird. Selbstverständlich können die die Führungsbacken bildenden Tragarme bei dieser Ausführungsform ebenfalls mit einem verschleißfesten Material beschichtet sein oder aus demselben bestehen.

Bei der Ausführungsform nach Figur 3 und 4 sind die Stabilisierungselemente und die Andrückrolle 35 einander in Sägerichtung gesehen unmittelbar nachgeordnet. Eine andere in Figur 5 dargestellte Ausführungsform sieht vor, die Führungsrolle 35 in ihrer ursprünglichen Lage mit relativ großem Abstand zur Laufsohle 6 zu belassen, während die Stabilisierungselemente in der unter Figur 3 und 4 beschriebenen Form angebracht und ausgeführt sind. Es versteht sich, daß anstelle der als Stellschraube ausgebildeten Stabilisierungselemente auch kleine Lagerrollen verwendet werden können.

An dieser Stelle sei angemerkt, daß sich an der erfindungsgemäßen Stichsäge anstelle des Sägeblattes auch andere Bearbeitungswerkzeuge spannen lassen, die dann ebenfalls mittels Stabilisierungselementen auf Höhe der Fußplatte geführt sind. Beispielhaft ist in Figur 6 die Stabilisierung einer Halbrundfeile 85 herausgegriffen und in Untersicht dargestellt. Daraus ist erkennbar, daß die Stabilisierungselemente 38 seitlich auf einen mit der Feile 85 verbundenen Schaft 87 arbeiten und gleichzeitig auch die Rückseite 86 der Feile 85 abstützen. Man erhält also eine wirkungsvolle Seitenführung und zusätzlich eine Abstützung entgegen der bei einer Bearbeitung auf die Feile von vorne her einwirkenden Druckkraft. Die abgebildeten Stabilisierungselemente 38 sind beispielhaft aus den bisher erläuterten Varianten herausgegriffen, selbstverständlich können an ihre Stelle auch anders gestaltete treten.

Zusammenfassend läßt sich feststellen, daß durch entsprechende Ausbildung der Stabilisierungselemente - gewölbt, kugelförmig, angespitzt- der Reibungswiderstand zwischen den korrespondierenden Anlageflächen der Stabilisierungselemente und des Sägeblattes infolge einer linienförmigen oder punktförmigen Anlage stark reduziert werden kann, gegenüber Ausführungsformen, bei denen die Stabilisierungselemente relativ großflächig am Sägeblatt anliegen. Auch erlauben diese Ausführungsformen ein unkompliziertes Verschwenken des Sägeblattes zum Durchführen von Gehrungsschnitten. Die Stabilisierungselemente können verstellbar angeordnet oder aber starr ausgebildet sein ; die verstellbare Ausführungsform läßt die Anpassung an Sägeblatt-Dickentoleranzen zu, die starre Ausführungsform ist kostengünstig herstellbar. Um eine besonders verschleißfeste Führung des Sägeblattes zu gewährleisten, sind die Stabilisierungselemente bzw. die Führungen aus temperaturfestem und verschleißfestem Material hergestellt, als Alternative hierzu kann auch eine Beschichtung der Stabilisierungselemente mit einerverschleißfreien Schicht oder mit einem verschleißfreien Führungsbelag erfolgen. Die Befestigung kann beispielsweise durch Plasmabeschichten, Flammspritzen, Löten, Kleben od.dgl. unlösbar erfolgen. Als Materialien für die Führungsflächen bieten sich Keramikwerkstoffe, z.B. Wolframkarbid, Hartmetalle, nitrierte Stähle od.dgl. an. Zur Minderung des Verschleißes kann eine Kühlung der Stabilisierungselemente bzw. Führungseinrichtungen durch direktes Anblasen der mit dem Sägeblatt zusammenarbeitenden Führungsflächen erfolgen, die Kühlluft wird vorteilhafterweise von der Motorluft geliefert, die in geeigneten Führungen geleitet wird (nicht dargestellt). Diese zusammenfassenden Ausführungen gelten selbstverständlich für sämtliche Ausführungsformen der erfindungsgemäßen Sägeblattführung.

## Patentansprüche

1. Stichsäge zum Bearbeiten von starren Materialien, wie Holz, mit einem mit einer Laufsohle (6) auf einem zu bearbeitenden Werkstück aufzulegenden Sägetisch (1), mit einem in einem Motorkopf (2) untergebrachten Antriebsaggregat (3) und einem durch das Antriebsaggregat periodisch bewegbaren Sägeblatthalter (4) mit einem endseitig einspannbaren Sägeblatt (5), sowie mit einer Einrichtung zur seitlichen Führung und Abstützung des Sägeblattes, die eine gegen die Sägeblattrückseite anliegende Andrückrolle (35) enthält, die an einem am Motorkopf gehalterten Pendelhalter (22) mit einer zur Sägeblattebene rechtwinkeligen Achse gelagert ist, dadurch gekennzeichnet, daß der Pendelhalter (22) sich bis in die Nähe der Laufsohle (6) des Sägetisches (1) erstreckt und im unteren Endbereich zwei das Sägeblatt (5) von,beiden Seiten flankierende und es zwischen sich aufnehmende Tragarme (71) für das Sägeblatt seitlich führende Stabilisierungselemente (53, 38) besitzt.

2. Stichsäge nach Anspruch 1, dadurch gekennzeichnet, daß die Tragarme (71) selbst als Stabilisierungselemente ausgebildet sind und aus einem verschleißfesten Material bestehen oder mit einem solchen beschichtet sind.

3. Stichsäge nach Anspruch 1 oder 2, dadurch gekennzeichnet, daß die Tragarme (71) als Stabilisierungselement jeweils eine Stellschraube (53) tragen, die in einer Gewindebohrung des Tragarmes auf das Sägeblatt zu und von diesem weg schraubbar ist und die an ihrem dem Sägeblatt zugewandten Stirnende einen Kugelfortsatz, ein Druckstück oder einen sonstigen Führungsbelag trägt.

4. Stichsäge nach einem der Ansprüche 1 bis 3, dadurch gekennzeichnet, daß die Tragarme (71) als Stabilisierungselement jeweils eine Kugel tragen, die in an den dem Sägeblatt (5) zugewandten Flächen des Tragarmes ausgebildeten Kugelkalotten vorzugsweise drehbar gelagert sind.

5. Stichsäge nach einem der Ansprüche 1 bis 4, dadurch gekennzeichnet, daß die Stabilisierungselemente der innerhalb einer Ausnehmung des Sägetisches (1) nahe der Laufsohle (11) gelagerten Andrückrolle (35) in Sägerichtung gesehen unmittelbar vorgeordnet sind.

6. Stichsäge nach einem der Ansprüche 1 bis 4, dadurch gekennzeichnet, daß die Andrückrolle (35) oberhalb der an den Tragarmen angeordneten Stabilisierungselemente vorgesehen ist.

## Claims

1. A compass saw for working rigid materials such as wood, with a table (1) for placement on the work-piece with a base plate (6), with a drive unit (3) housed in a motor head (2) and with a saw-blade holder (4) having, saw-blade (5) clamped to its end for cyclical operation by the drive unit, and with a device forthe lateral guidance and support of the saw-blade comprising a back-up roller (35) mounted on a floating holder (22) fitted to the motor head to rest against the back of the saw-blade, its shaft being vertical to the saw-blade plane, characterised in that the floating holder (22) extends close to the base plate (6) of the table (1) and has, at its lower end, two stabilising elements (53, 38) flanking the saw-blade (5) and laterally guiding it between support arms (71) for the saw blade.

2. A compass saw according to Claim 1, characterised in that the support arms (71) are themselves designed as stabilising elements, either consisting of or coated with a wear-resistant material.

3. A compass saw according to Claim 1 or 2, characterised in that each support arm (71) carries, as a stabilising element, a set screw (53) adjustable towards and away from the saw-blade in a threaded hole of the support arm and having, at the end adjacent to the saw-blade, a spherical extension, thrust piece or other means of guidance.

4. A compass saw according to any of Claims 1 to 3, characterised in that each support arm carries, as a stabilising element, a ball, which is preferably rotatably mounted in spherical cups formed in those surfaces of the support arm which are facing the saw-blade (5).

5. A compass saw according to any of Claims 1 to 4, characterised in that the stabilising elements are located immediately in front of the back-up roller (35) mounted within a recess of the table (1) near the base plate (11) if viewed in the direction of sawing.

6. A compass saw according to any of Claims 1 to 4, characterised in that the back-up roller (35) is located above the stabilising elements on the support arms.

## Revendications

1. Scie sauteuse pour le travail de matériaux rigides tels que du bois, comportant une table de sciage (1) avec une semelle (6) à placer sur la pièce à travailler, comportant un groupe d'entraînement (3) placé dans une tête de moteur (2) et un support de lame de scie (4) déplacé périodiquement par le groupe d'entraînement avec une lame de scie (5) fixée à une extrémité, comportant aussi un dispositif pour guider latéralement et soutenir la lame de scie, qui comprend un galet de pression (35), s'appliquant contre le dos de la lame de scie et qui est monté sur un support pendulaire (22), fixé sur la tête du moteur, avec un axe perpendiculaire au plan de la lame de scie, caractérisée en ce que le support pendulaire (22) s'étend jusqu'à proximité de la semelle (6) de la table de sciage (1) et possède, dans la région terminale inférieure, deux éléments de stabilisation (53, 38), placés de part et d'autre de la lame de scie (5) et la guidant latéralement entre des bras de support (71) destinés à la lame de scie.

2. Scie sauteuse selon la revendication 1, caractérisée en ce que les bras de support (71) sont eux- mêmes des éléments de stabilisation et sont réalisés dans un matériau résistant à l'usure ou revêtus d'un tel matériau.

3. Scie sauteuse selon la revendication 1 ou 2, caractérisée en ce que les bras de support (71), servant d'éléments de stabilisation, portent chacun une vis de réglage (53) qui peut être vissée dans un trou taraudé du bras de support, en direction de la lame de scie et en s'éloignant de celle-ci et qui porte, sur son extrémité frontale tournée vers la lame de scie, un prolongement sphérique, une pièce de pression ou une autre garniture de guidage.

4. Scie sauteuse selon l'une quelconque des revendications 1 à 3, caractérisée en ce que les bras de support (71) servant d'éléments de stabilisation portent chacun une sphère qui est montée, de préférence tournante, dans des calottes sphériques, formées sur les faces du bras de support tournées vers la lame de scie (5).

5. Scie sauteuse selon l'une quelconque des revendications 1 à 4, caractérisée en ce que les éléments de stabilisation sont placés, directement en amont - dans le sens du sciage - du galet de pression (35), monté à 1, intérieurd'un évidement de la table de sciage (1 à à proximité de la semelle (11).

6. Scie sauteuse selon l'une quelconque des revendications 1 à 4, caractérisée en ce qu,on prévoit le galet de pression (35) au-dessus des eléments de stabilisation, placés sur les bras de support.
